# EUROPÄISCHE PATENTSCHRIFT

(11) **EP 4 109 690 B1**
(45) Veröffentlichungstag und Bekanntmachung des Hinweises auf die Patenterteilung: **24.01.2024**
(21) Anmeldenummer: 22179098.3
(22) Anmeldetag: 15.06.2022
(51) Int. Cl.: H02B 1/28, H02G 3/08, H05K 5/00, H02B 1/30, H02B 1/40

(54) **ELEKTROVERTEILER- UND/ODER BRANDSCHUTZKASTEN UND BAUSATZ DAFÜR**
ELECTRIC DISTRIBUTION AND / OR FIRE PROTECTION BOX AND KIT THEREFOR
BOÎTIER DE DISTRIBUTEUR ÉLECTRIQUE ET/OU COUPE-FEU ET KIT ASSOCIÉ

(30) Priorität: 23.06.2021 DE 102021116195
(43) Veröffentlichungstag der Anmeldung: 28.12.2022
(73) Patentinhaber: Müller-Otto, Jens, 08427 Fraureuth (DE); Bäuerlein, Florian, 63526 Erlensee (DE)
(72) Erfinder: Müller-Otto, Jens, 08427 Fraureuth (DE); Bäuerlein, Florian, 63526 Erlensee (DE)
(74) Vertreter: Steiniger, Carmen

(56) Entgegenhaltungen:
- DE-A1-102006 054 616
- DE-U1- 20 217 661
- DE-U1-202004 019 510

## Beschreibung

Die vorliegende Erfindung betrifft einen Elektroverteiler- und/oder Brandschutzkasten mit einer Grundplatte mit vier Eckbereichen, zwei einander gegenüber angeordneten Längsseitenstrukturen, zwei einander gegenüber angeordneten Querseitenstrukturen und einer Deckplattenstruktur. Die Erfindung betrifft ferner einen Bausatz für einen solchen Elektroverteiler- und/oder Brandschutzkasten.

In Elektroverteilerkästen sind u. a. Funktionserhaltkabel vorzugsweise brandgeschützt hinein und aus diesen wieder heraus zu führen. Bekannte Elektroverteilerkästen besitzen hierfür vorgefertigte Einführungslöcher, in die insbesondere Kabel mit großen Querschnitten nur schwer einführbar sind und die nur eine unzureichende Abdichtung in einem Brandfall gewährleisten. In einem Gehäuseinnenraum des jeweiligen Elektroverteilergehäuses erfolgt eine Verteilung der Kabel, wobei typischerweise Klemmen und Sicherungen zum Einsatz kommen.

Die Druckschrift DE 20 2004 019 510 U1 beinhaltet einen Brandschutzschrank, dessen Decken-, Boden-, Rück- und Seitenwände und dessen Tür jeweils einen brandschutzsicheren Wandaufbau aus mehreren Schichten aufweisen. Die Seitenwände und die Bodenwand weisen von außen nach innen eine beschichtete Außenplatte aus Gips und/oder Holzfasern, eine eine Mineralfaserplatte aufweisende Zwischenschicht und eine Innenschicht aus einer beispielsweise melaminbeschichteten Spanfaserplatte auf. Die schwenkbare Tür, die zusätzlich noch zwei Silikatschichten aufweist, ist durch Scharniere an einer der Seitenwände befestigt. Der Brandschutzschrank besitzt eine brandschutzsichere Kabeldurchführung, die in Normalenrichtung zur jeweiligen Wandfläche geschichtet aufgebaut ist und eine mit Stützmaterial und Durchführöffnungen versehenen Kabeldurchführungsinnenkörper aufweist, wobei wenigstens an dessen Außenseite eine Brandschutzschaumschicht und ein Bausteinblech vorgesehen ist.

Aus der Druckschrift US 4,201,903 B ist ein belastbares Strukturelement aus Metall oder Kunststoff bekannt, das beispielsweise als Wandelement nutzbar ist und wärme- und schallisolierende Eigenschaften besitzt. Das Strukturelement besteht aus zwei oder mehr Strukturschalen oder -platten, die einen Hohlraum einschließen. In dem Hohlraum können sich Verstärkungsmittel, wie beispielsweise Wabenplatten oder Abstandsstreifen, mit dazwischen liegenden festen Platten, aber auch mit luftdichter Folie abgedeckte Kunststoffschaumplatten, befinden. Wenigstens eine der Strukturschalen ist flexibel, sodass sie sich beispielsweise verbiegen kann. In dem Hohlraum wird ein Unterdruck erzeugt.

Die Druckschrift DE 202 17 661 U1 offenbart einen Klemmenkasten für Brandschutzzwecke, der einen Grundkörper und einen Deckel aufweist, der entweder ein in Nuten des Grundkörpers schiebbarer Schiebedeckel ist oder den Grundkörper übergreifende Seitenflächen aufweist, sodass er auf den Grundkörper aufgesetzt werden kann, oder so ausgebildet ist, dass er in einer Vertiefung des Grundkörpers anordenbar ist. Der Grundkörper und der Deckel bestehen jeweils aus vorzugsweise mittels Klammern verbundenen Brandschutzplatten, die z. B. aus Kalziumsulfat oder aus geblähtem Glimmer bestehen. Der Brandschutzkasten weist eine Bohrung für eine Kabeldurchführung auf, die mit einer Brandschutzmasse ausgespritzt ist.

In dem deutschen Patent DE 10 2020 112 493 B3 ist ein Verteiler- und/oder Brandschutzgehäuse mit Korpuswänden offenbart, die jeweils aus einem Plattenverbund aus einer inneren Kalziumsilikatplatte, einer mittleren Mineralfaserplatte und einer äußeren Gipsfaserplatte ausgebildet sind. Dieser Aufbau weist einen besonders hohen Feuerwiderstand auf. In wenigstens eine der Korpuswände ist ein aus wenigstens einer Mineralfaserplatte ausgebildeter Schott als brandgeschützte Leitungsdurchführung integriert. Indem die Leitungen durch die Mineralfaserplatte durchgestoßen werden, sind diese an der Durchstoßstelle vollumfänglich von dem Mineralfasermaterial umgeben, sodass in einem Brandfall Feuer an der Leitungsdurchführungsstelle nicht durchschlagen kann. Hier ist es schwierig, insbesondere Funktionserhaltkabel, die einen großen Querschnitt haben, durch das Mineralfasermaterial geeignet hindurchzustoßen.

Die Druckschrift DE 10 2006 054616 A1 offenbart einen Rangierverteiler, umfassend ein einen Hohlraum umschließendes Gehäuse mit einer Vorder- und einer Rückwand sowie Seitenwänden, wobei alle Wände aus mindestens feuerhemmenden Brandschutzplatten gebildet sind und wobei an mindestens einer Seitenwand mindestens eine Kabeldurchführung zum Hohlraum vorgesehen ist. Das Gehäuse ist aus mindestens drei Schichten aufeinanderliegender Brandschutzplatten gebildet, wobei mindestens eine zur mittleren Schicht gehörende Brandschutzplatte zur Ausbildung des Hohlraums eine Ausnehmung aufweist. Mindestens zwei Gewindestangen durchgreifen zueinander fluchtende Durchgangsbohrungen der Schichten und halten diese miteinander fest.

Es ist daher die Aufgabe der vorliegenden Erfindung, einen Elektroverteiler- und/oder Brandschutzkasten zur Verfügung zu stellen, der eine brandschutzsichere und trotzdem leicht handhabbare Ein- und Ausführung für Funktionserhaltkabel aufweist. Ferner soll ein geeigneter und leicht montierbarer Bausatz für einen solchen Elektroverteiler- und/oder Brandschutzkasten bereitgestellt werden.

Diese Aufgabe wird durch ein Elektroverteiler- und/oder Brandschutzkasten mit einer Grundplatte mit vier Eckbereichen, zwei einander gegenüber angeordneten Längsseitenstrukturen, zwei einander gegenüber angeordneten Querseitenstrukturen und einer Deckplattenstruktur gelöst, bei dem in die Eckbereiche der Grundplatte jeweils wenigstens eine senkrecht zu einer Innenoberfläche der Grundplatte ausgerichtete Gewindestange eingebracht ist; in die Längsseitenstrukturen jeweils zwei den jeweiligen Gewindestangen zugeordnete Gewindestangenaufnahmehülsen eingebracht sind; die Querseitenstrukturen jeweils wenigstens zwei, übereinander angeordnete Mineralfaserlagen aufweisen; auf Oberseiten der Längsseitenstrukturen und der Querseitenstrukturen eine Rahmenstruktur aufgesetzt ist, wobei die Rahmenstruktur aus einem umlaufenden, auf die Gewindestangen aufgesetzten Basisrahmen und zwei einander gegenüber angeordneten, jeweils auf eine der Querseitenstrukturen aufgesetzten Aufdopplungslagen zusammengesetzt ist; und die Deckplattenstruktur mit der Rahmenstruktur mittels der Gewindestangen und zugehöriger Muttern verschraubt ist.

Bei dem erfindungsgemäßen Elektroverteiler- und/oder Brandschutzkasten sind die Längsseitenstrukturen mittels der darin eingebrachten Gewindestangenaufnahmehülsen auf die Gewindehülsen aufgeschoben, wodurch die Längsseitenstrukturen mit der Grundplatte verbunden sind. Die Längsseitenstrukturen sind beidseitig des Elektroverteiler- und/oder Brandschutzkastens durch die Querseitenstrukturen verbunden.

Dieser Aufbau wird durch die darauf aufgesetzte, umlaufende Rahmenstruktur zusammengehalten. Durch die jeweils auf die Querseitenstrukturen aufgesetzten Aufdopplungslagen der Rahmenstruktur können die Mineralfaserlagen der Querseitenstrukturen vorteilhaft zusammengepresst werden, wenn die Gesamtstruktur verschraubt wird.

Durch die Deckplattenstruktur wird das Konstrukt aus Grundplatte, Längs- und Querseitenstrukturen und Rahmenstruktur verschlossen.

Bei dem erfindungsgemäßen Elektroverteiler- und/oder Brandschutzkasten werden die Kabel durch die Mineralfaserlagen wenigstens einer der Querseitenstrukturen ein- oder ausgeführt. Dabei können Kabel mit kleinerem Querschnitt problemlos durch das Material der Mineralfasern hindurchgesteckt werden. Kabel mit größerem Querschnitt, wie beispielsweise Funktionserhaltkabel, können bei auseinandergebauter bzw. noch nicht verschraubter Querseitenstruktur bzw. durch Auseinanderbauen des Elektroverteiler- und/oder Brandschutzgehäuses in einzelne Schichten zwischen die wenigstens zwei, übereinander angeordneten Mineralfaserlagen der jeweiligen Querseitenstruktur gelegt und damit in einen Gehäuseinnenraum des Elektroverteiler- und/oder Brandschutzkastens eingeführt oder aus diesem herausgeführt werden.

Der erfindungsgemäße Elektroverteiler- und/oder Brandschutzkasten kann einfach zusammen- und auseinandergebaut werden. Insbesondere die Kabeldurchführung des Elektroverteiler- und/oder Brandschutzkasten ist in dessen zusammengebauten Zustand hochgradig brandschutzsicher. Dies wird erfindungsgemäß dadurch erreicht, dass die jeweils wenigstens zwei für die Kabeldurchführung dienenden, übereinander geschichteten Mineralfaserlagen der Querseitenstrukturen zum einen mittels der Gewindestangen, durch die der Gesamtaufbau verschraubt und die Deckplattenstruktur in Richtung der Grundplatte gezogen wird, zusammengedrückt werden und zum anderen positionsstabil zwischen der Grundplatte und dem über den Mineralfaserplatten angeordneten Strukturaufbau gehalten werden. So können Kabel bzw. elektrische Leitungen vorteilhaft in dem Material der Mineralfaserlagen der jeweiligen Querseitenstruktur gehalten als auch zwischen zwei der Mineralfaserlagen der jeweiligen Querseitenstruktur eingeklemmt werden.

Die Querseitenstrukturen bilden damit für unterschiedliche Kabelgrößen geeignete und in jedem Fall brandschutzsichere Schotts aus, sodass bei dem erfindungsgemäßen Elektroverteiler- und/oder Brandschutzkasten eine einfache und flexible Kabelmontage möglich ist.

Durch den die Gewindestangen und die Gewindestangenaufnahmehülsen aufweisenden Aufbau des erfindungsgemäßen Elektroverteiler- und/oder Brandschutzkastens können die Längsseitenstrukturen auf einfache Weise jeweils als Block auf die Gewindestangen aufgesetzt werden.

Die Mineralfaserlagen des Elektroverteiler- und/oder Brandschutzkastens sind vorzugsweise bis mindestens 1000 °C temperaturstabil.

In einer bevorzugten Ausführungsform der Erfindung weist die Deckplattenstruktur eine auf die Rahmenstruktur und die Gewindestangen aufgesetzte Außenplatte und eine mit der Außenplatte verbundene, in einen durch die Längsseitenstrukturen und die Querseitenstrukturen ausgebildeten Gehäuseinnenraum des Elektroverteiler- und/oder Brandschutzkastens ragende Innenplatte auf. Durch die aufgesetzte Deckplattenstruktur wird insbesondere dadurch, dass die Außenplatte der Deckplattenstruktur auf der Rahmenstruktur aufliegt und die Innenplatte der Deckplattenstruktur in die Rahmenstruktur ragt, eine besonders vorteilhafte Abdichtung des Elektroverteiler- und/oder Brandschutzkastens erzielt.

Vorzugsweise ist die Außenplatte der Deckplattenstruktur aus wenigstens einer Gipsfaserplatte ausgebildet und die Innenplatte der Deckplattenstruktur aus wenigstens einer Kalziumsilikatplatte ausgebildet. Während sich im Brandfall die außen befindliche Gipsfaserplatte der Deckplattenstruktur aufgrund des eigenen Verbrauchs durch Verdunstung des im Gips kristallin gebundenen Wassers leicht nach außen biegt, bleibt die innen befindliche Kalziumsilikatplatte auch bei hohen Temperaturen noch lange in ihrer Form und stellt im Brandfall noch lange die Dichtheit der Deckplattenstruktur, d. h. des Deckels des Elektroverteiler- und/oder Brandschutzkastens, sicher.

Die Handhabbarkeit der Deckplattenstruktur wird besonders erleichtert, wenn bei einer solchen Ausführungsform der Erfindung an einem Außenplattenrand der Außenplatte der Deckplattenstruktur wenigstens eine Griffmulde ausgebildet ist.

In einer vorteilhaften Ausführungsform des erfindungsgemäßen Elektroverteiler- und/oder Brandschutzkastens weisen die Längsseitenstrukturen jeweils einen U-förmigen Querschnitt auf. Damit ist es möglich, die Querseitenstrukturen einfach zwischen die jeweiligen Endbereichen der Längsseitenstrukturen einzusetzen, ohne dass an den Querseitenstrukturen selbst ein Kantenschutz oder ähnliches vorgesehen werden muss. So können insbesondere die Querseitenstrukturen einfach gestaltet werden, was ihre Demontage, beispielsweise zum Einbringen von Kabeln mit großem Querschnitt zwischen zwei der Mineralfaserlagen der jeweiligen Querseitenstruktur, erleichtert.

Vorzugsweise ist der Basisrahmen unabhängig von der Deckplattenstruktur über die Längsseitenstrukturen mit der Grundplatte verschraubt. Dadurch sind die Grundplatte, die Längs- und die Querseitenstrukturen auch dann stabil fixiert, auch wenn die Deckplattenstruktur nicht aufgesetzt ist.

Günstig ist es, wenn an durch die Grundplatte geführten Enden der Gewindestangen jeweils ein Gegenhaltefuß geschweißt ist und an einer Außenseite der Grundplatte Aussparungen für die Gegenhaltefüße ausgebildet sind. So können die Gewindestangen von unten durch die Grundplatte eingeführt werden und stützen sich durch ihre Gegenhaltefüße an der Unterseite der Grundplatte ab. Da die Gegenhaltefüße in den Aussparungen aufgenommen werden, ergibt sich eine homogene, stabile Aufstellfläche für den Elektroverteiler- und/oder Brandschutzkasten.

Dabei ist es von Vorteil, wenn die Aussparungen und die Gegenhaltefüße jeweils zueinander komplementäre Formen aufweisen, sodass die Aussparungen Verdrehsicherungen für die Gegenhaltefüße ausbilden.

Vorzugsweise weisen die Längsseitenstrukturen Mineralfaserlagen mit einer Dichte von wenigstens 150 kg/m³ und die Mineralfaserlagen der Querseitenstrukturen eine Dichte in einem Bereich von 40 bis 80 kg/m³ auf.

Die Mineralfaserlagen dienen in erster Linie als Dämmlagen. Die relativ hohe Dichte der Mineralfaserlagen der Längsseitenstrukturen schafft besonders gute Dämmeigenschaften. Die geringere Dichte der zusammengepressten Mineralfaserlagen der Querseitenstrukturen ermöglicht es, dass Kabel einfach durch diese hindurchgesteckt werden können.

Durch den Einsatz der Mineralfaserlagen ergibt sich ein sehr geringes Gewicht des erfindungsgemäßen Elektroverteiler- und/oder Brandschutzkastens. Dadurch kann er besonders leicht vor Ort installiert werden.

Als Mineralfaserlagen werden bei der vorliegenden Erfindung vorzugsweise Steinwollplatten verwendet. Diese ist bis mindestens 1.000 °C temperaturbeständig, was sich besonders vorteilhaft für die Beständigkeit des Elektroverteiler- und/oder Brandschutzkastens in einem Brandfall auswirkt.

Vorzugsweise weisen alle zum Aufbau des erfindungsgemäßen Elektroverteiler- und/oder Brandschutzkastens verwendeten Mineralfaserlagen, insbesondere aber die Mineralfaserlagen der Querseitenstrukturen, keine Beschichtung, insbesondere keine Beschichtung mit einem bei Überschreitung eines Temperaturschwellenwertes aufschäumenden Material, auf. Bevorzugt sind alle zum Aufbau des erfindungsgemäßen Elektroverteiler- und/oder Brandschutzkastens verwendeten Mineralfaserlagen, insbesondere aber die Mineralfaserlagen der Querseitenstrukturen, in Bezug auf durchgeführte Kabel wechselwirkungsfrei. Besonders bevorzugt weisen alle zum Aufbau des erfindungsgemäßen Elektroverteiler- und/oder Brandschutzkastens verwendeten Mineralfaserlagen, insbesondere aber die Mineralfaserlagen der Querseitenstrukturen, keine ablativen oder intumeszierenden Bestandteile auf. Somit gibt es auch keine unerwünschten Wechselwirkungen zwischen einer solchen Beschichtung und/oder solchen Bestandteilen und den durch die oder zwischen den Mineralfaserplatten der Querseitenstrukturen durchgeführten Kabeln oder Leitungen. Dadurch ist eine uneingeschränkte Kabelbelegung möglich.

Als mechanischer Schutz und aus optischen Gründen ist es jedoch von Vorteil, wenn die Längsseitenstrukturen eine Außenkaschierung aus Aluminium aufweisen. Dabei können an Außenecken der Längsseitenstrukturen Winkel unter der Außenkaschierung zur Eckenstabilisierung angeordnet sein.

Vorzugsweise sind bei dem erfindungsgemäßen Elektroverteiler- und/oder Brandschutzkasten die Grundplatte und die Rahmenstruktur aus Gipsfaserplatten ausgebildet. Die Gipsfaserplatten enthalten im Gips kristallin gebundenes Wasser, das oberhalb einer bestimmten Temperatur abgegeben wird. Umgekehrt haben die Gipsfaserplatten eine relativ hohe Dichte und können daher nur schlecht Feuchtigkeit aufnehmen. Daher setzen die Gipsfaserplatten in einem Brandfall Feuchtigkeit frei und kühlen den Elektroverteiler- und/oder Brandschutzkasten.

Um den erfindungsgemäßen Elektroverteiler- und/oder Brandschutzkasten leicht an einer Wand, einer Decke oder an einer sonstigen Fläche montieren zu können, ist es günstig, wenn in die Grundplatte wenigstens eine Dübelaufnahmeöffnung eingebracht ist.

Die Aufgabe wird darüber hinaus durch einen Bausatz für einen Elektroverteiler- und/oder Brandschutzkasten gelöst, wobei der Bausatz eine Grundplatte mit vier Eckbereichen, zwei einander gegenüber angeordnete Längsseitenstrukturen, zwei einander gegenüber angeordnete Querseitenstrukturen und eine Deckplattenstruktur aufweist, wobei der Bausatz jeweils senkrecht zu einer Innenoberfläche der Grundplatte in die Eckbereiche der Grundplatte einbringbare Gewindestangen aufweist; in die Längsseitenstrukturen jeweils zwei den jeweiligen Gewindestangen zugeordnete Gewindestangenaufnahmehülsen eingebracht sind; die Querseitenstrukturen jeweils wenigstens zwei, übereinander angeordnete Mineralfaserlagen aufweisen; der Bausatz eine auf Oberseiten der Längsseitenstrukturen und der Querseitenstrukturen aufsetzbare Rahmenstruktur aufweist, wobei die Rahmenstruktur aus einem umlaufenden, auf die Gewindestangen aufsetzbaren Basisrahmen und zwei einander gegenüber angeordneten, jeweils auf eine der Querseitenstrukturen aufsetzbaren Aufdopplungslagen zusammengesetzt ist; und der Bausatz Muttern zum Verschrauben der Deckplattenstruktur mit der Rahmenstruktur mittels der Gewindestangen und der Muttern aufweist.

Um aus dem Bausatz den Elektroverteiler- und/oder Brandschutzkasten auszubilden, werden die Längsseitenstrukturen mittels der darin eingebrachten Gewindestangenaufnahmehülsen auf die Gewindehülsen aufgeschoben, wodurch die Längsseitenstrukturen mit der Grundplatte verbunden sind. Zwischen die Längsseitenstrukturen werden beidseitig des Elektroverteiler- und/oder Brandschutzkastens die Querseitenstrukturen eingebracht.

Auf diesen Aufbau wird dann umlaufende Rahmenstruktur aufgeschraubt. Durch die jeweils auf die Querseitenstrukturen aufgesetzten Aufdopplungslagen der Rahmenstruktur werden die Mineralfaserlagen der Querseitenstrukturen vorteilhaft zusammengepresst.

Durch die Deckplattenstruktur wird das Konstrukt aus Grundplatte, Längs- und Querseitenstrukturen und Rahmenstruktur verschlossen.

Der Bausatz ermöglicht es, den erfindungsgemäßen Elektroverteiler- und/oder Brandschutzkasten derart auszubilden, dass in diesen einzubringende und aus diesem herauszuführende Kabel durch die Mineralfaserlagen wenigstens einer der Querseitenstrukturen ein- oder ausgeführt werden können. Dabei können Kabel mit kleinerem Querschnitt durch das Material der Mineralfasern hindurchgesteckt werden, während Kabel mit größerem Querschnitt schon vor dem Zusammenschrauben Elemente des Bausatzes zwischen die wenigstens zwei, übereinander angeordneten Mineralfaserlagen der jeweiligen Querseitenstruktur gelegt und damit in einen Gehäuseinnenraum des Elektroverteiler- und/oder Brandschutzkastens eingeführt oder aus diesem herausgeführt werden können.

Eine vorteilhafte Ausführungsform des erfindungsgemäßen Elektroverteiler- und/oder Brandschutzkastens sowie Ausführungsformen von Elementen des erfindungsgemäßen Bausatzes für einen Elektroverteiler- und/oder Brandschutzkasten, deren Aufbau, Funktion und Vorteile werden im Folgenden anhand von Figuren näher erläutert, wobei
- Figur 1: schematisch eine Ausführungsform eines erfindungsgemäßen Elektroverteiler- und/oder Brandschutzkastens mit Blick auf eine seiner Längsseitenstrukturen in einer geschnittenen Seitenansicht zeigt;
- Figur 2: schematisch eine Ausführungsform eines erfindungsgemäßen Elektroverteiler- und/oder Brandschutzkastens mit Blick auf eine seiner Querseitenstrukturen in einer geschnittenen Seitenansicht zeigt;
- Figur 3: schematisch eine Draufsicht auf eine Grundplatte mit eingebrachten Gewindestangen einer Ausführungsform eines erfindungsgemäßen Elektroverteiler- und/oder Brandschutzkastens bzw. eines erfindungsgemäßen Bausatzes für einen Elektroverteiler- und/oder Brandschutzkasten zeigt;
- Figur 4: schematisch die Grundplatte mit den darin eingebrachten Gewindestangen aus Figur 3 in einer geschnittenen Seitenansicht entlang der Linie A - A' von Figur 3 zeigt;
- Figur 5: schematisch eine Gewindestange einer Ausführungsform eines erfindungsgemäßen Elektroverteiler- und/oder Brandschutzkastens bzw. eines erfindungsgemäßen Bausatzes für einen Elektroverteiler- und/oder Brandschutzkasten in einer geschnittenen Seitenansicht zeigt;
- Figur 6: schematisch eine Draufsicht auf eine Längsseitenstruktur einer Ausführungsform eines erfindungsgemäßen Elektroverteiler- und/oder Brandschutzkastens bzw. eines erfindungsgemäßen Bausatzes für einen Elektroverteiler- und/oder Brandschutzkasten zeigt;
- Figur 7: schematisch die Längsseitenstruktur aus Figur 6 in einer geschnittenen Seitenansicht entlang der Linie B - B` von Figur 6 zeigt;
- Figur 8: schematisch eine Draufsicht auf eine Rahmenstruktur einer Ausführungsform eines erfindungsgemäßen Elektroverteiler- und/oder Brandschutzkastens bzw. eines erfindungsgemäßen Bausatzes für einen Elektroverteiler- und/oder Brandschutzkasten zeigt;
- Figur 9: schematisch die Rahmenstruktur aus Figur 8 in einer geschnittenen Seitenansicht entlang der Linie C - C' von Figur 8 zeigt;
- Figur 10: schematisch eine Draufsicht auf eine Innenseite einer Deckplattenstruktur einer Ausführungsform eines erfindungsgemäßen Elektroverteiler- und/oder Brandschutzkastens bzw. eines erfindungsgemäßen Bausatzes für einen Elektroverteiler- und/oder Brandschutzkasten zeigt; und
- Figur 11: schematisch die Deckplattenstruktur aus Figur 10 in einer geschnittenen Seitenansicht entlang der Linie D - D' von Figur 10 zeigt.

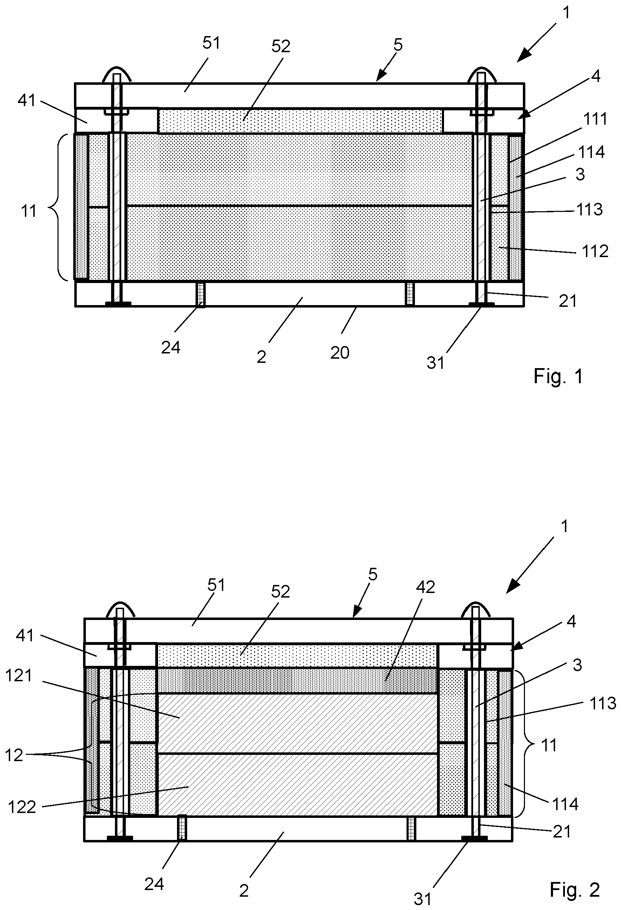

Die Figuren 1 und 2 zeigen schematisch eine Ausführungsform eines erfindungsgemä-ßen Elektroverteiler- und/oder Brandschutzkastens 1, wobei Figur eine geschnittene Seitenansicht einer der Längsseiten mit einer der Längsseitenstrukturen 11 des Elektroverteiler- und/oder Brandschutzkastens 1 zeigt und Figur 2 eine geschnittene Seitenansicht einer der Querseiten mit einer der Querseitenstrukturen 12 des Elektroverteiler- und/oder Brandschutzkastens 1 zeigt. Der Elektroverteiler- und/oder Brandschutzkasten 1 ist in dem gezeigten Ausführungsbeispiel ein Elektrokleinverteiler.

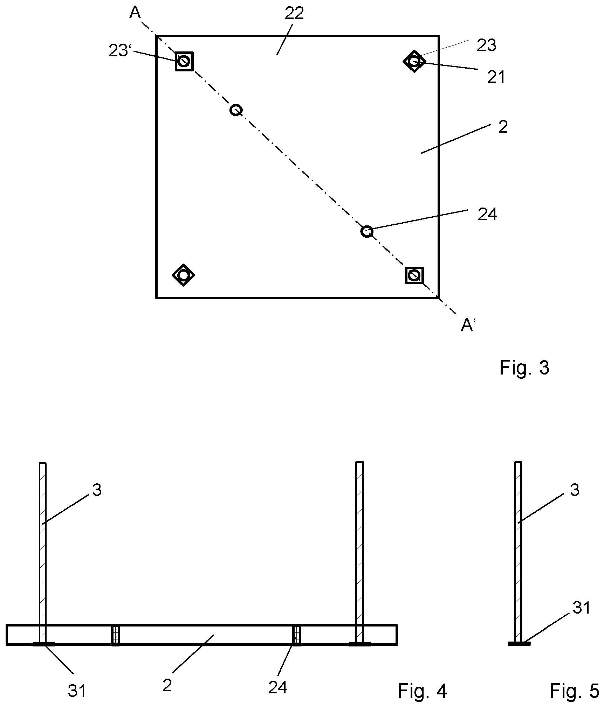

Der Elektroverteiler- und/oder Brandschutzkastens 1 weist eine Grundplatte 2 auf, welche in Figur 3 nochmals einzeln in einer Draufsicht dargestellt ist. Die Grundplatte 2 ist in der gezeigten Ausführungsform eine Gipsfaserplatte, die eine solche Dichte aufweist, dass daran mit Grobgewindeschrauben ohne Vorbohren elektrische Einbauten individuell befestigt werden können.

Die Grundplatte 2 ist rechteckig ausgebildet, weist also vier Eckbereiche auf. In ihren Eckbereichen weist die Grundplatte 2 jeweils eine Durchgangsöffnung 21 auf, durch die jeweils eine Gewindestange 3 hindurch geführt ist. In ihrer Rückseite 22 weist die Grundplatte 2 an den Stellen, an welchen die Durchgangsöffnungen 21 ausgebildet sind, jeweils eine um die jeweilige Durchgangsöffnung 21 verlaufende Aussparung 23, 23' in Form einer Materialvertiefung in der Grundplatte 2 auf. In den Aussparungen 23, 23' sind jeweils am unteren Ende der Gewindestangen 3 an diese jeweils angeschweißte Gegenhaltefüße 31 aufgenommen. In der gezeigten Ausführungsform weisen die Aussparungen 23, 23' und die Gegenhaltefüße 31 jeweils zueinander komplementäre Formen auf. In dem gezeigten Ausführungsbeispiel sind die Aussparungen 23, 23' und die Gegenhaltefüße 31 jeweils viereckig ausgebildet, können aber auch andere Formen aufweisen. Dadurch wird gewährleistet, dass keine Verdrehung stattfindet, d. h. dass in die jeweilige Durchgangsöffnung 21 der Grundplatte 2 auch die zugehörige Gewindestange 3 eingesetzt wird, sodass die jeweils mit dieser Gewindestange 3 gekoppelte Längsseitenstruktur 11 richtig auf der Grundplatte 2 platziert wird.

Die Grundplatte 2 weist ferner Dübelaufnahmeöffnungen 24 auf, durch die die Grundplatte 2 beispielsweise mittels Dübeln und Schrauben an einer Wand oder einer sonstigen Haltefläche befestigt werden kann.

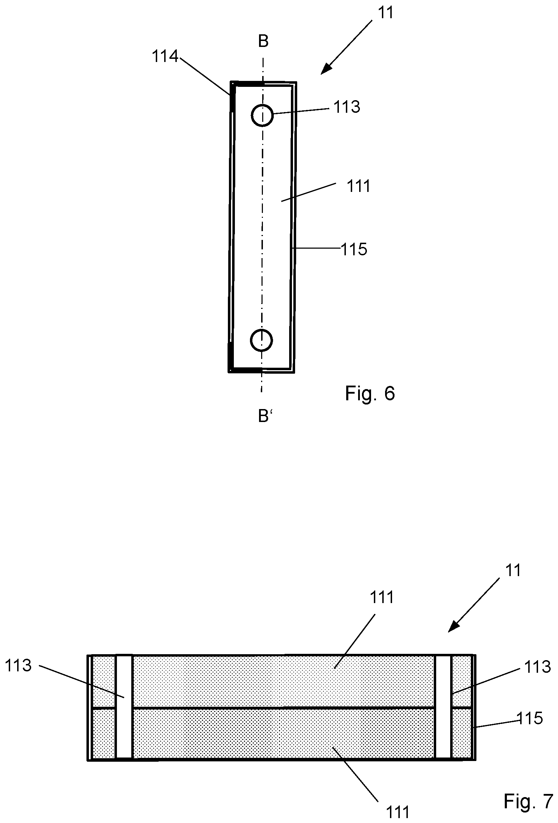

Figur 6 zeigt schematisch eine Draufsicht auf eine Längsseitenstruktur 11 des Elektroverteiler- und/oder Brandschutzkastens 1, während Figur 7 schematisch die Längsseitenstruktur 11 aus Figur 6 in einer geschnittenen Seitenansicht entlang der Linie B - B` von Figur 6 zeigt.

Wie es in den Figuren 1 und 7 zu sehen ist, weisen die Längsseitenstrukturen 11 des Elektroverteiler- und/oder Brandschutzkastens 1 jeweils zwei übereinander angeordnete Mineralfaserlagen 111, 112 auf, durch die zwei Gewindestangenaufnahmehülsen 113 hindurchgeführt sind. Durch die Gewindestangenaufnahmehülsen 113 ist jeweils eine der Gewindestangen 3 hindurchgeführt.

Um die Mineralfaserlagen 111, 112 der Längsseitenstrukturen 11 ist eine Außenkaschierung 115 aus Aluminium ausgebildet.

Wie es in den Figuren 1, 2 und 6 zu sehen ist, ist in dem gezeigten Ausführungsbeispiel an äußeren Ecken der Längsseitenstrukturen 11 jeweils ein Winkel 114 unter der Au-ßenkaschierung 115 angeordnet.

In dem gezeigten Ausführungsbeispiel weisen die Mineralfaserlagen 111, 112 der Längsseitenstrukturen 11 eine Dichte von 150 kg/m³ auf. In anderen Ausführungsform der Erfindung können die Mineralfaserlagen 111, 112 auch noch eine höhere Dichte aufweisen.

Das Konstrukt aus den Mineralfaserlagen 111, 112, Gewindestangenaufnahmehülsen 113 ist vorzugsweise als ein zusammenhängender Block ausgebildet, der im Ganzen auf die jeweiligen Gewindestangen 3 aufgesetzt und abgezogen werden kann.

Wie es in Figur 2 zu sehen ist, reichen in dem gezeigten Ausführungsbeispiel die Enden der Längsseitenstrukturen 11 bis an die Querseite des Elektroverteiler- und/oder Brandschutzkastens 1. Zwischen diesen Enden der Längsseitenstrukturen 11 befinden sich die jeweiligen Querseitenstrukturen 12 des Elektroverteiler- und/oder Brandschutzkastens 1. In der gezeigten Ausführungsform sind die Längsseitenstrukturen 11 in der Draufsicht U-förmig ausgebildet, sodass die Querseitenstrukturen 12 zwischen den freien Enden des U aufgenommen sind.

Jede der beiden Querseitenstrukturen 12 weist zwei Mineralfaserlagen 121, 122 auf, die jeweils geringere Dicken als die Mineralfaserlagen 111, 112 der Längsseitenstrukturen 11 aufweisen.

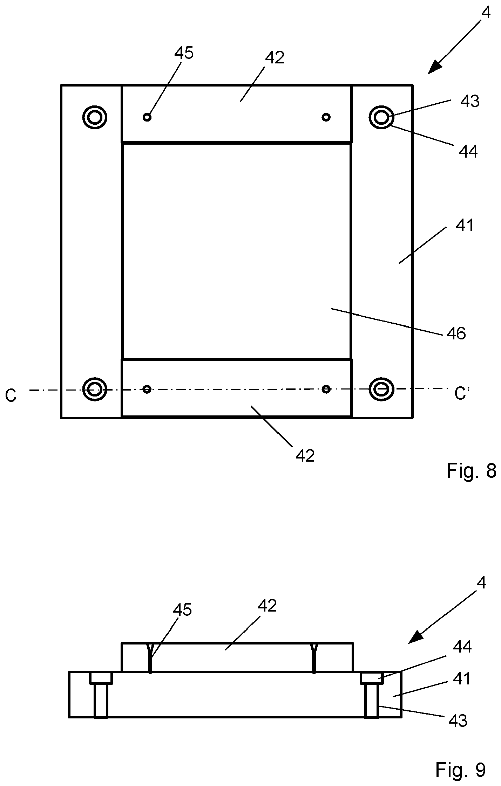

Auf die Oberseiten der Längsseitenstrukturen 11 und der Querseitenstrukturen 12 ist eine Rahmenstruktur 4 aufgesetzt. Die Rahmenstruktur 4 ist jeweils einzeln schematisch in Figur 8 in einer Draufsicht und in Figur 9 in einer geschnittenen Seitenansicht dargestellt.

Wie es besonders gut in Figur 9 zu sehen ist, ist die Rahmenstruktur 4 aus einem umlaufenden, rechteckigen Basisrahmen 41 und zwei einander gegenüber angeordneten, streifenförmigen Aufdopplungslagen 42 zusammengesetzt. Der Basisrahmen 41 ist auf die Gewindestangen 3 aufgesetzt. Die Aufdopplungslagen 42 sind jeweils auf eine der Querseitenstrukturen 12 aufgesetzt.

In der gezeigten Ausführungsform sind der Basisrahmen 41 und die Aufdopplungslagen 42 aus Gipsfaserplatten ausgebildet.

Die Aufdopplungslagen 42 drücken die Mineralfaserlagen 121, 122 der Querseitenstrukturen 12 zusammen. In diesem zusammengepressten Zustand weisen die Mineralfaserlagen 121, 122 in dem gezeigten Ausführungsbeispiel eine Dichte von 50 kg/m³ auf.

Die Mineralfaserlagen 111, 112, 121, 122 bestehen in der gezeigten Ausführungsform aus Steinwolle.

Die jeweils eine Aufleistung auf dem Basisrahmen 41 ausbildenden Aufdopplungslagen 42 sind in dem gezeigten Ausführungsbeispiel mit dem Basisrahmen 41 mittels Schrauben 45 verbunden.

Der Basisrahmen 41 weist in seinen vier Ecken Rahmenaufnahmebohrungen 43 zur Aufnahme der Gewindestangen 3 auf. An den äußeren Enden der Rahmenaufnahmebohrungen 43 ist jeweils eine Ausfräsung 44 zur Aufnahme einer Verschraubung ausgebildet.

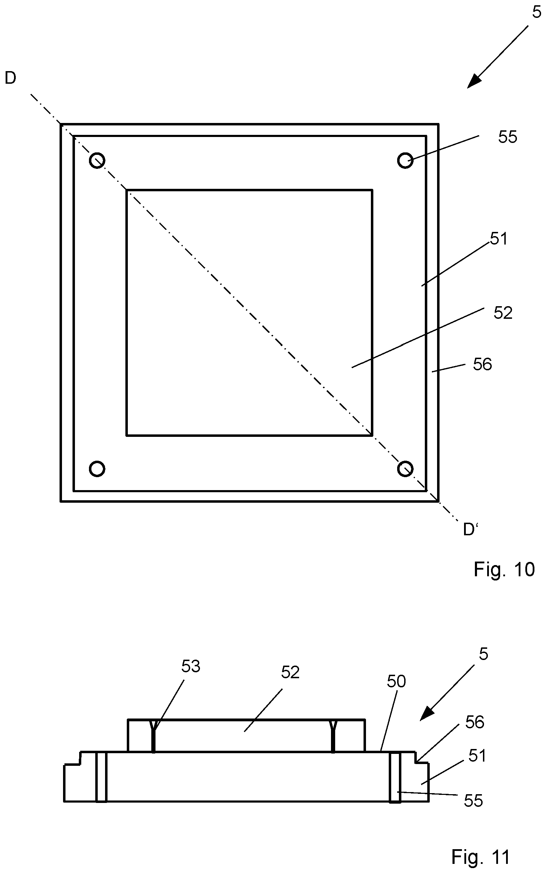

Figur 10 zeigt schematisch eine Draufsicht auf eine Innenseite einer auf die Rahmenstruktur 4 aufgesetzten Deckplattenstruktur 5 des Elektroverteiler- und/oder Brandschutzkastens. In Figur 11 ist die Deckplattenstruktur 5 aus Figur 10 in einer geschnittenen Seitenansicht entlang der Linie D - D' von Figur 10 gezeigt.

Die Deckplattenstruktur 5 ist aus einer Außenplatte 51 und einer Innenplatte 52 zusammengesetzt. In dem gezeigten Ausführungsbeispiel ist die Innenplatte 52 mittels Schrauben 53 an einer Innenseite 50 der Außenplatte 51 befestigt. Die Innenplatte 52 weist eine derartige Breite und eine derartige Länge auf, dass sie in einen Innenbereich 46 der Rahmenstruktur 4 und damit in einen durch die Längsseitenstrukturen 11 und die Querseitenstrukturen 12 ausgebildeten Gehäuseinnenraum des Elektroverteiler- und/oder Brandschutzkastens 1 hineinragen kann.

In der gezeigten Ausführungsform ist die Außenplatte 51 der Deckplattenstruktur 5 aus einer Gipsfaserplatte ausgebildet, während die Innenplatte 52 der Deckplattenstruktur 5 aus einer Kalziumsilikatplatte ausgebildet ist.

Die Deckplattenstruktur 5 ist, wie in Figur 1 zu sehen, auf die Gewindestangen 3 aufgesetzt. Hierfür weist die Außenplatte 51 in ihren vier Eckbereichen jeweils eine Durchgangsbohrung 55 auf.

In der gezeigten Ausführungsform ist an einem Außenrand der Innenseite 50 der Außenplatte 51 eine Griffmulde 56 ausgebildet.

Wie es aus den Figuren 3 bis 11 hervorgeht, können für einzelne Bausteine des Elektroverteiler- und/oder Brandschutzkastens 1, wie die Grundplatte 2, die Gewindestangen 3, die Längsseitenstrukturen 11 mit den darin eingebrachten Gewindestangenhülsen 113, gegebenenfalls eckengeschützt durch die Winkel 114 und mit der Außenkaschierung 115, die Mineralfaserlagen 121, 122 der Querseitenstrukturen 12, die Rahmenstruktur 4 und/oder die Deckenstruktur 5 vorgefertigt und/oder bereitgestellt werden und vor Ort zu dem Elektroverteiler- und/oder Brandschutzkasten 1 zusammengebaut werden.

## Patentansprüche

1. Elektroverteiler- und/oder Brandschutzkasten (1) mit einer Grundplatte (2) mit vier Eckbereichen, zwei einander gegenüber angeordneten Längsseitenstrukturen (11), zwei einander gegenüber angeordneten Querseitenstrukturen (12) und einer Deckplattenstruktur, wobei in die Eckbereiche der Grundplatte (2) jeweils wenigstens eine senkrecht zu einer Innenoberfläche der Grundplatte (2) ausgerichtete Gewindestange (3) eingebracht ist; in die Längsseitenstrukturen (11) jeweils zwei den jeweiligen Gewindestangen (3) zugeordnete Gewindestangenaufnahmehülsen (113) eingebracht sind; die Querseitenstrukturen (12) jeweils wenigstens zwei, übereinander angeordnete Mineralfaserlagen (121, 122) aufweisen; auf Oberseiten der Längsseitenstrukturen (11) und der Querseitenstrukturen (12) eine Rahmenstruktur (4) aufgesetzt ist, wobei die Rahmenstruktur (4) aus einem umlaufenden, auf die Gewindestangen (3) aufgesetzten Basisrahmen (41) und zwei einander gegenüber angeordneten, jeweils auf eine der Querseitenstrukturen (12) aufgesetzten Aufdopplungslagen (42) zusammengesetzt ist; und die Deckplattenstruktur (5) mit der Rahmenstruktur (4) mittels der Gewindestangen (3) und zugehöriger Muttern verschraubt ist.

2. Elektroverteiler- und/oder Brandschutzkasten nach Anspruch 1, **dadurch gekennzeichnet, dass** die Deckplattenstruktur (5) eine auf die Rahmenstruktur (4) und die Gewindestangen (3) aufgesetzte Außenplatte (51) und eine mit der Außenplatte (51) verbundene, in einen durch die Längsseitenstrukturen (11) und die Querseitenstrukturen (12) ausgebildeten Gehäuseinnenraum des Elektroverteiler- und/oder Brandschutzkastens (1) ragende Innenplatte (52) aufweist.

3. Elektroverteiler- und/oder Brandschutzkasten nach Anspruch 2, **dadurch gekennzeichnet, dass** die Außenplatte (51) der Deckplattenstruktur (5) aus wenigstens einer Gipsfaserplatte ausgebildet ist und die Innenplatte (52) der Deckplattenstruktur (5) aus wenigstens einer Kalziumsilikatplatte ausgebildet ist.

4. Elektroverteiler- und/oder Brandschutzkasten nach Anspruch 2 oder 3, **dadurch gekennzeichnet, dass** an einem Außenplattenrand der Außenplatte (51) der Deckplattenstruktur (5) wenigstens eine Griffmulde (56) ausgebildet ist.

5. Elektroverteiler- und/oder Brandschutzkasten nach einem der vorhergehenden Ansprüche, **dadurch gekennzeichnet, dass** die Längsseitenstrukturen (11) jeweils einen U-förmigen Querschnitt aufweisen.

6. Elektroverteiler- und/oder Brandschutzkasten nach einem der vorhergehenden Ansprüche, **dadurch gekennzeichnet, dass** die Rahmenstruktur (4) unabhängig von der Deckplattenstruktur (5) über die Längsseitenstrukturen (11) mit der Grundplatte (2) verschraubt ist.

7. Elektroverteiler- und/oder Brandschutzkasten nach einem der vorhergehenden Ansprüche, **dadurch gekennzeichnet, dass** an durch die Grundplatte (2) geführten Enden der Gewindestangen (3) jeweils ein Gegenhaltefuß (31) geschweißt ist und an einer Außenseite (20) der Grundplatte (2) Aussparungen (23, 23') für die Gegenhaltefüße (31) ausgebildet sind.

8. Elektroverteiler- und/oder Brandschutzkasten nach Anspruch 7, **dadurch gekennzeichnet, dass** die Aussparungen (23, 23') und die Gegenhaltefüße (31) jeweils zueinander komplementäre Formen aufweisen.

9. Elektroverteiler- und/oder Brandschutzkasten nach einem der vorhergehenden Ansprüche, **dadurch gekennzeichnet, dass** die Längsseitenstrukturen (11) Mineralfaserlagen (111, 112) mit einer Dichte von wenigstens 150 kg/m³ aufweisen und die Mineralfaserlagen (121, 122) der Querseitenstrukturen (12) eine Dichte in einem Bereich von 40 bis 80 kg/m³ aufweisen.

10. Elektroverteiler- und/oder Brandschutzkasten nach einem der vorhergehenden Ansprüche, **dadurch gekennzeichnet, dass** die Mineralfaserlagen (121, 122) der Querseitenstrukturen (12) keine Beschichtung aufweisen.

11. Elektroverteiler- und/oder Brandschutzkasten nach einem der vorhergehenden Ansprüche, **dadurch gekennzeichnet, dass** die Längsseitenstrukturen (11) eine Au-ßenkaschierung (115) aus Aluminium aufweisen.

12. Elektroverteiler- und/oder Brandschutzkasten nach einem der vorhergehenden Ansprüche, **dadurch gekennzeichnet, dass** die Grundplatte (2) und die Rahmenstruktur (4) aus Gipsfaserplatten ausgebildet sind.

13. Elektroverteiler- und/oder Brandschutzkasten nach einem der vorhergehenden Ansprüche, **dadurch gekennzeichnet, dass** in die Grundplatte (2) wenigstens eine Dübelaufnahmeöffnung (24) eingebracht ist.

14. Bausatz für einen Elektroverteiler- und/oder Brandschutzkasten (1), wobei der Bausatz eine Grundplatte (2) mit vier Eckbereichen, zwei einander gegenüber angeordnete Längsseitenstrukturen (11), zwei einander gegenüber angeordnete Querseitenstrukturen (12) und eine Deckplattenstruktur (5) aufweist, wobei der Bausatz jeweils senkrecht zu einer Innenoberfläche der Grundplatte (2) in die Eckbereiche der Grundplatte (2) einbringbare Gewindestangen (3) aufweist; in die Längsseitenstrukturen (11) jeweils zwei den jeweiligen Gewindestangen (3) zugeordnete Gewindestangenaufnahmehülsen (113) eingebracht sind; die Querseitenstrukturen (12) jeweils wenigstens zwei, übereinander angeordnete Mineralfaserlagen (121, 122) aufweisen; der Bausatz eine auf Oberseiten der Längsseitenstrukturen (11) und der Querseitenstrukturen (12) aufsetzbare Rahmenstruktur (4) aufweist, wobei die Rahmenstruktur (4) aus einem umlaufenden, auf die Gewindestangen (3) aufsetzbaren Basisrahmen (41) und zwei einander gegenüber angeordneten, jeweils auf eine der Querseitenstrukturen (12) aufsetzbaren Aufdopplungslagen (42) zusammengesetzt ist; und der Bausatz Muttern zum Verschrauben der Deckplattenstruktur (5) mit der Rahmenstruktur (4) mittels der Gewindestangen (3) und der Muttern aufweist.

## Claims

1. Electric distribution and/or fire protection box (1) with a base plate (2) with four corner sections, two longitudinal side structures (11) arranged opposite of one another, two transverse side structures (12) arranged opposite of one another, and a cover plate structure, wherein at least one threaded rod (3) with perpendicular orientation relative to an inner surface of the base plate (2) is inserted into each of the corner sections of the base plate (2); two threaded rod reception sleeves (113) allocated to the respective threaded rods (3) each are respectively inserted into the longitudinal side structures (11); the transverse side structures (12) each comprise at least two mineral fiber layers (121, 122) arranged one above the other; a frame structure (4) is placed onto upper sides of the longitudinal side structures (11) and the transverse side structures (12), said frame structure (4) being composed of a circumferential base frame (41) placed onto the threaded rods (3) and two add-on layers (42) arranged opposite to one another and placed onto one of the transverse side structures (12) each; and the cover plate structure (5) is screwed to the frame structure (4) by means of the threaded rods (3) and corresponding nuts.

2. Electric distribution and/or fire protection box according to claim 1, **characterized in that** the cover plate structure (5) comprises an outer plate (51) placed onto the frame structure (4) and the threaded rods (3), and an inner plate (52) connected to the outer plate (51) and protruding into an interior space of the housing of the electric distribution and/or fire protection box (1) formed by the longitudinal side structures (11) and the transverse side structures (12).

3. Electric distribution and/or fire protection box according to claim 2, **characterized in that** the outer plate (51) of the cover plate structure (5) is formed from at least one gypsum fiber board and the inner plate (52) of the cover plate structure (5) is formed from at least one calcium silicate board.

4. Electrical distribution and/or fire protection box according to claim 2 or 3, **characterized in that** at least one recessed handle (56) is formed on an outer plate edge of the outer plate (51) of the cover plate structure (5).

5. Electrical distribution and/or fire protection box according to one of the preceding claims, **characterized in that** the longitudinal side structures (11) each have a U-shaped cross section.

6. Electrical distribution and/or fire protection box according to one of the preceding claims, **characterized in that** the frame structure (4) is screwed to the base plate (2) via the longitudinal side structures (11) independently from the cover plate structure (5).

7. Electrical distribution and/or fire protection box according to one of the preceding claims, **characterized in that** a counterholder foot (31) each is welded to respective ends of the threaded rods (3) guided through the base plate (2), and recesses (23, 23') for the counterholder feet (31) are formed at an outer side (20) of the base plate (2).

8. Electrical distribution and/or fire protection box according to claim 7, **characterized in that** the recesses (23, 23') and the counterholder feet (31) each have shapes that are complementary to one another.

9. Electrical distribution and/or fire protection box according to one of the preceding claims, **characterized in that** the longitudinal side structures (11) comprise mineral fiber layers (111, 112) with a density of at least 150 kg/m³ and the mineral fiber layers (121, 122) of the transverse side structures (12) have a density in a range of 40 to 80 kg /m³.

10. Electrical distribution and/or fire protection box according to one of the preceding claims, **characterized in that** the mineral fiber layers (121, 122) of the transverse side structures (12) have no coating.

11. Electrical distribution and/or fire protection box according to one of the preceding claims, **characterized in that** the longitudinal side structures (11) have an outside lamination (115) made of aluminum.

12. Electrical distribution and/or fire protection box according to one of the preceding claims, **characterized in that** that base plate (2) and the frame structure (4) are made of gypsum fiber boards.

13. Electrical distribution and/or fire protection box according to one of the preceding claims, **characterized in that** at least one anchor receiving opening (24) is inserted into the base plate (2).

14. Kit for an electrical distribution and/or fire box (1), wherein the kit comprises a base plate (2) with four corner sections, two longitudinal side structures (11) arranged opposite of one another, two transverse side structures (12) arranged opposite of one another, and a cover plate structure (5), wherein the kit comprises threaded rods (3) which can be inserted into the corner sections of the base plate (2) perpendicular relative to an inner surface of the base plate (2) each; two threaded rod reception sleeves (113) allocated to the respective threaded rods (3) each respectively inserted into the longitudinal side structures (11); the transverse side structures (12) each comprise at least two mineral fiber layers (121, 122) arranged one above the other; the kit comprises a frame structure (4) which can be placed onto upper sides of the longitudinal side structures (11) and the transverse side structures (12), said frame structure (4) being composed of a circumferential base frame (41) that can be placed onto the threaded rods (3), and two add-on layers (42) arranged opposite to one another that can be placed onto one of the transverse side structures (12) each; and the kit comprises nuts for screwing the cover plate structure (5) to the frame structure (4) by means of the threaded rods (3) and the nuts.

## Revendications

1. Boîtier de distribution électrique et/ou coupe-feu (1) comprenant une plaque de base (2) avec quatre sections d'angle, deux structures latérales longitudinales (11) disposées en face l'une de l'autre, deux structures latérales transversales (12) disposées en face l'une de l'autre, et une structure de plaque de recouvrement, au moins une tige filetée (3) alignée perpendiculairement à une surface intérieure de la plaque de base (2) étant insérée dans les sections d'angle de la plaque de base (2) ; deux manchons de réception (113) de tige filetée attribués aux tiges filetées (3) respectives étant insérés dans les structures latérales longitudinales (11) ; les structures latérales transversales (12) présentant chacune au moins deux couches de fibres minérales (121, 122) disposées l'une au-dessus de l'autre ; une structure de cadre (4) étant placée sur les côtés supérieurs des structures latérales longitudinales (11) et des structures latérales transversales (12), la structure de cadre (4) étant constituée d'un cadre de base (41) circonférentiel placé sur les tiges filetées (3) et deux couches doubles (42) disposées en face l'une de l'autre et chacune placée sur une des structures latérales transversales (12) ; et la structure de plaque de recouvrement (5) étant vissée à la structure de cadre (4) au moyen des tiges filetées (3) et des écrous associés.

2. Boîtier de distribution électrique et/ou coupe-feu selon la revendication 1, **caractérisé en ce que** la structure de plaque de recouvrement (5) présente une plaque extérieure (51) posée sur la structure de cadre (4) et les tiges filetées (3), et une plaque intérieure (52) reliée à la plaque extérieure (51) et faisant saillie dans un espace intérieur de coffret du boîtier de distribution électrique et/ou coupe-feu (1) formé par les structures latérales longitudinales (11) et les structures latérales transversales (12).

3. Boîtier de distribution électrique et/ou coupe-feu selon la revendication 2, **caractérisé en ce que** la plaque extérieure (51) de la structure de plaque de recouvrement (5) est formée d'au moins une plaque fibres-gypse et la plaque intérieure (52) de la structure de plaque de recouvrement (5) est formée d'au moins une plaque de silicate de calcium.

4. Boîtier de distribution électrique et/ou coupe-feu selon les revendications 2 ou 3, **caractérisé en ce qu'**au moins une poignée en retrait (56) est formée sur un bord de plaque extérieure de la plaque extérieure (51) de la structure de plaque de recouvrement (5).

5. Boîtier de distribution électrique et/ou coupe-feu selon l'une des revendications précédentes, **caractérisé en ce que** les structures latérales longitudinales (11) présentent chacune une section transversale en forme de U.

6. Boîtier de distribution électrique et/ou coupe-feu selon l'une des revendications précédentes, **caractérisé en ce que** la structure de cadre (4) est vissée à la plaque de base (2) via les structures latérales longitudinales (11), indépendamment de la structure de plaque de recouvrement (5).

7. Boîtier de distribution électrique et/ou coupe-feu selon l'une des revendications précédentes, **caractérisé en ce qu'**un pied de contre-support (31) est soudé à chaque extrémité des tiges filetées (3) guidées à travers la plaque de base (2) et des évidements (23, 23') pour les pieds de contre-support (31) sont formés à un côté extérieur (20) de la plaque de base (2).

8. Boîtier de distribution électrique et/ou coupe-feu selon la revendication 7, **caractérisé en ce que** les évidements (23, 23') et les pieds de contre-support (31) ont chacun des formes complémentaires les uns aux autres.

9. Boîtier de distribution électrique et/ou coupe-feu selon l'une des revendications précédentes, **caractérisé en ce que** les structures latérales longitudinales (11) présentent des couches de fibres minérales (111, 112) d'une densité d'au moins 150 kg/m³ et les couches de fibres minérales (121, 122) des structures latérales transversales (12) ont une densité comprise dans une gamme de 40 à 80 kg/m³.

10. Boîtier de distribution électrique et/ou coupe-feu selon l'une des revendications précédentes, **caractérisé en ce que** les couches de fibres minérales (121, 122) des structures latérales transversales (12) ne comportent aucun revêtement.

11. Boîtier de distribution électrique et/ou coupe-feu selon l'une des revendications précédentes, **caractérisé en ce que** les structures latérales longitudinales (11) présentent un laminage extérieure (115) en aluminium.

12. Boîtier de distribution électrique et/ou coupe-feu selon l'une des revendications précédentes, **caractérisé en ce que** la plaque de base (2) et la structure de cadre (4) sont constituées de plaques fibres-gypse.

13. Boîtier de distribution électrique et/ou coupe-feu selon l'une des revendications précédentes, **caractérisé en ce qu'**au moins une ouverture de réception de cheville (24) est ménagée dans la plaque de base (2).

14. Kit pour un boîtier de distribution électrique et/ou coupe-feu (1), le kit comprenant une plaque de base (2) avec quatre sections d'angle, deux structures latérales longitudinales (11) disposées en face l'une de l'autre, deux structures latérales transversales (12) disposées en face l'une à l'autre, et une structure de plaque de recouvrement (5), le kit comprenant des tiges filetées (3) qui peuvent être insérées dans les sections d'angle de la plaque de base (2) perpendiculairement à une surface intérieure de la plaque de base (2) ; deux manchons de réception (113) de tige filetée attribués aux tiges filetées (3) respectives étant insérées dans les structures latérales longitudinales (11) ; les structures latérales transversales (12) présentant chacune au moins deux couches de fibres minérales (121, 122) disposées l'une au-dessus de l'autre ; le kit comprenant une structure de cadre (4) qui peut être placée sur les côtés supérieurs des structures latérales longitudinales (11) et des structures latérales transversales (12), la structure de cadre (4) étant constituée d'un cadre de base (41) circonférentiel qui peut être placé sur les tiges filetées (3) et deux couches doubles (42) disposées l'une en face de l'autre qui peuvent être placées sur l'une des structures latérales transversales (12) ; et le kit comprenant des écrous pour visser la structure de plaque de recouvrement (5) à la structure de cadre (4) au moyen des tiges filetées (3) et des écrous.
